# EUROPEAN PATENT SPECIFICATION

(11) **EP 0 688 829 B1**
(45) Date of publication and mention of the grant of the patent: **27.08.1997**
(21) Application number: 95303976.5
(22) Date of filing: 09.06.1995
(51) Int. Cl.: C09B 5/48

(54) **Process for the production of dianthraquinone-N,N'-dihydroazine**
Verfahren zur Herstellung von Dianthrachinon-N,N'-dihydroazin
Procédé pour la production de la dianthraquinone-N,-N'-dihydroazine

(30) Priority: 20.06.1994 JP 136759/94
(43) Date of publication of application: 27.12.1995
(73) Proprietor: MITSUI TOATSU CHEMICALS, INCORPORATED, Tokyo (JP)
(72) Inventor: Hirayama, Akira, Omuta-shi, Fukuoka-ken (JP); Ohkuma, Tadashi, Omuta-shi, Fukuoka-ken (JP); Itoh, Hisato, Omuta-shi, Fukuoka-ken (JP)
(74) Representative: Stuart, Ian Alexander

(56) References cited:
- EP-A- 0 572 854
- DE-A- 3 422 385
- DATABASE WPI Section Ch, Week 8710 Derwent Publications Ltd., London, GB; Class E22, AN 87-070292 & JP-A-62 025 167 ( MITSUI TOATSU CHEM INC) , 3 February 1987

## Description

This invention relates to a process for the production of dianthraquinone-N,N'-dihydroazine which is a condensation product of 1-aminoanthraquinone. Dianthraquinone-N,N'-dihydroazine has long been known as a blue vat dye having excellent light resistance, and a highly pure product thereof can dye cotton and the like in a reddish bright blue color. This compound is also important as a pigment and, further, as an intermediate for the production of 3,3'-dichlorodianthraquinone-N,N'-dihydroazine.

A variety of processes for the production of dianthraquinone-N,N'-dihydroazine have been disclosed up to this time. In an old process as described in PB reports BIOS987 and FIAT1313, 2-aminoanthraquinone is condensed by an alkaline condensing agent in the presence of an oxidizing agent without using any organic solvent.

Also known are processes in which 1-aminoanthraquinone (hereinafter abbreviated as "1-AAQ") is condensed in a dissolved or suspended state in an organic solvent, as described, for example, in Japanese Patent Laid-Open No. 17222/'76. They include a process in which 1-AAQ is condensed by an alkaline condensing agent in an organic phosphorus oxide (such as hexamethylphosphorotriamide) or an organic nitrogen oxide (such as pyridine-N-oxide), and a process in which 1-AAQ is condensed by an alkaline condensing agent in the presence of an organic sulfone or sulfoxide compound, as described in Japanese Patent Publication No. 1280/'65. In these processes, however, the yield of the resulting dianthraquinone-N,N'-dihydroazine is very low. Thus, these processes cannot be regarded as industrially advantageous processes.

Processes which can solve these problems have been disclosed by.the present applicant (assignee) in Japanese Patent Laid-Open Nos. 1169/'85 and 25167/'87. According to these processes, the desired product of high quality can be produced in high yield by reacting 1-AAQ with an alkaline condensing agent in the presence of 1,3-dimethyl-2-imidazolidinone (hereinafter abbreviated as "DMI").

Nevertheless, dianthraquinone-N,N'-dihydroazine produced by these processes still contains several impurities of unknown structure, which tend to impart a dark tone to the color of the dyed materials. In order to remove these impurities, it has been necessary to purify the product, for example, by treatment with sodium hydrosulfite.

### SUMMARY OF THE INVENTION

Preferred embodiments of the present invention may provide an industrially advantageous process by which high-quality dianthraquinone-N,N'-dihydroazine containing very small amounts of such impurities can be produced in high yield.

The present inventors made intensive investigations and have now completed the present invention. Accordingly, the present invention provides a process for the production of dianthraquinone-N,N'-dihydroazine which comprises the steps of suspending 1-aminoanthraquinone in a solvent mixture composed of an aprotic polar solvent and water in a weight ratio ranging from 80:20 to 99:1, and reacting the 1-AAQ by adding an alkaline condensing agent to the suspension.

### DETAILED DESCRIPTION OF THE PREFERRED EMBODIMENTS

In the method of the present invention, the weight ratio of the aprotic polar solvent and water ranges from 80:20 to 99:1. If the weight ratio of the aprotic polar solvent and water is outside the aforesaid range, the formation of impurities causative of a dark color increases, resulting in a reduction in the quality and yield of the product.

In the process of the present invention, the starting 1-AAQ first recrystallizes in the solvent mixture composed of the aprotic polar solvent and water. When the weight ratio of the aprotic polar solvent to water is in the aforesaid range, crystals of regular shape are formed. The weight ratio of the aprotic polar solvent to water preferably ranges from 85:15 to 98.5:1.5, more preferably from 92:8 to 98:2, and most preferably from 94:6 to 96:4. In this case, the most stable needle crystals are formed. If the weight ratio of the aprotic polar solvent to water is outside the range of 80:20 to 99:1, it is believed that irregular crystals increase, thus exerting an adverse influence on yield and the like.

Preferred examples of the aprotic polar solvent used in the process of the present invention are DMI and 1,3,6-trimethylhexahydro-1,3,6-triazin-2-one (hereinafter abbreviated as "TMA").

The aprotic polar solvent is usually used in an amount of 0.1 to 10.0 parts by weight, preferably 0.2 to 5.0 parts by weight, and more preferably 1.0 to 3.0 parts by weight, per part by weight of the starting 1-AAQ.

If the amount of aprotic polar solvent used is extremely small, an increase in viscosity tends to occur during the condensation reaction, resulting in a reduction in the quality of dianthraquinone-N,N'-dihydroazine.

In the present invention, the reaction can be made to proceed more gently by adding a phase-transfer catalyst to the aforesaid suspension of 1-AAQ. No particular limitation is placed on the type of phase-transfer catalyst used, so long as it is a compound which, in a heterogeneous system consisting of two or more phases, functions to facilitate the reaction of a material in one phase with a material in the other phase. However, quaternary ammonium salts, ethylene glycol compounds, organic phosphorus compounds, crown ether compounds, calixarene compounds and phosphonium salt compounds are especially preferred. These compounds may be used alone or in admixture of two or more.

Among the usable phase-transfer catalysts are quaternary ammonium salts represented by the following general formula (1): 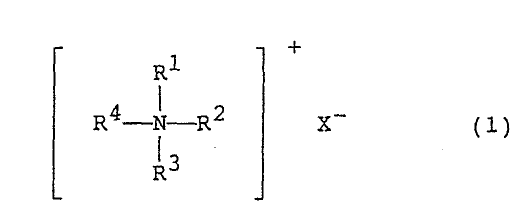 where R¹, R², R³ and R⁴ identically or independently represent unsubstituted or substituted alkyl groups or unsubstituted or substituted aryl groups. Examples of the unsubstituted or substituted alkyl groups include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, chloromethyl, hydroxyethyl, methoxypropyl, aminomethyl, methylcarbonylmethyl, benzyl and phenethyl groups; and examples of the unsubstituted or substituted aryl groups include phenyl, methoxyphenyl, ethoxyphenyl, tolyl, chlorophenyl, fluorophenyl, hydroxyphenyl, aminophenyl and nitrophenyl groups. Examples of the counter ion X⁻ include fluoride, chloride, bromide, iodide, hydrogen sulfate, sulfate, phosphate, hydrogen phosphate, cyanide, periodate, acetate, toluenesulfonate, trifluoromethanesulfonate and hydroxide ions.

Among the usable phase-transfer catalysts are ethylene glycol compounds represented by the following general formula (2): 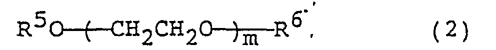 where R⁵ and R⁶ identically or independently represent hydrogen atoms or alkyl groups, and m represents a whole number of 2 to 5.

The alkyl groups which may be present in the general formula (2) include, for example, methyl, ethyl, propyl, butyl, hexyl and dodecyl groups. Especially preferred ethylene glycol compounds include, for example, diethylene glycol monomethyl ether, diethylene glycol dimethyl ether, diethylene glycol monoethyl ether, diethylene glycol diethyl ether, diethylene glycol monobutyl ether and pentaethylene glycol monomethyl ether.

Among the usual phase-transfer catalysts are organic phosphorus compounds such as phosphine, phosphine oxide and phosphine sulfide compounds represented by the following general formulas (3), (4) and (5); 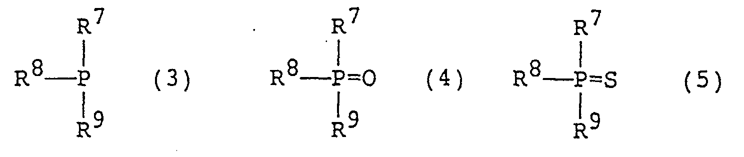 where R⁷, R⁸ and R⁹ identically or independently represent unsubstituted or substituted alkyl groups, unsubstituted or substituted alkoxy groups, or unsubstituted or substituted aryl groups.

In formulas (3), (4) and (5), examples of the unsubstituted or substituted alkyl groups include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, chloromethyl, hydroxyethyl, methoxypropyl, aminomethyl, methylcarbonylmethyl, benzyl and phenethyl groups; examples of the unsubstituted or substituted alkoxy groups include methoxy, ethoxy, propoxy, butoxy, pentoxy, chloromethoxy, hydroxyethoxy, methoxybutoxy and aminopropoxy groups; and examples of the unsubstituted or substituted aryl groups include phenyl, methoxyphenyl, ethoxyphenyl, tolyl, chlorophenyl, fluorophenyl, hydroxyphenyl, aminophenyl and nitrophenyl groups.

Among the usable phase-transfer catalysts are crown ether compounds in which part or all of the ethylene moieties are replaced by phenylene moieties. Moreover, part or all of the ethylene or phenylene moieties may be substituted. In such cases, examples of the substituents include alkyl groups such as methyl, ethyl and propyl groups; alkoxy groups such as methoxy and ethoxy groups; hydroxyl group; alkylcarbonyl groups such as methylcarbonyl and ethylcarbonyl groups; hydroxycarbonyl group; alkoxycarbonyl groups such as methoxycarbonyl and ethoxycarbonyl groups; amino group; alkylamino groups such as methylamino and ethylamino groups; nitro group; and halogen atoms such as fluorine, chlorine, bromine and iodine. Furthermore, part or all of the oxygen atoms may be replaced by nitrogen, sulfur or phosphorus atoms. Preferred crown ether compounds are ones having skeletons such as 12-crown-4, 15-crown-5, 18-crown-6, 21-crown-7 and 24-crown-8.

Among the usable phase-transfer catalysts are calixarene compounds represented by the following general formula (6): 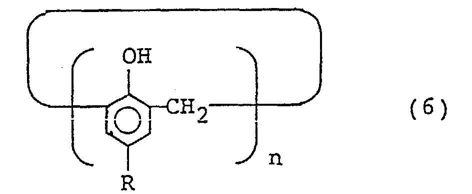 where R represents a hydrogen atom or an unsubstituted or substituted alkyl group, and n represents a whole number of 2 to 10. Examples of the unsubstituted or substituted alkyl group present in formula (6) include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, chloromethyl, hydroxyethyl, methoxypropyl, aminomethyl, methylcarbonylmethyl, benzyl and phenethyl groups.

Among the usable phase-transfer catalysts are phosphonium salt compounds represented by the following general formula (7): 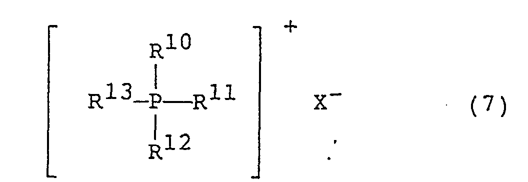 where R¹⁰, R¹¹, R¹² and R¹³ identically or independently represent unsubstituted or substituted alkyl groups or unsubstituted or substituted aryl groups. Examples of the unsubstituted or substituted alkyl groups include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, chloromethyl, hydroxyethyl, methoxypropyl, aminomethyl, methylcarbonylmethyl, benzyl and phenethyl groups; and examples of the unsubstituted or substituted aryl groups include phenyl, methoxyphenyl, ethoxyphenyl, tolyl, chlorophenyl, fluorophenyl, hydroxyphenyl, aminophenyl and nitrophenyl groups. Examples of the counter ion X⁻ include fluoride, chloride, bromide, iodide, hydrogen sulfate, sulfate, phosphate, hydrogen phosphate, cyanide, periodate, acetate, toluenesulfonate, trifluoromethanesulfonate and hydroxide ions.

Among these phase-transfer catalysts, quaternary ammonium salts, organic phosphorus compounds, crown ether compounds, calixarene compounds and phosphonium salt compounds are usually used in an amount of 0.001 to 20.0 mole %, preferably 0.01 to 10.0 mole %, based on the starting 1-AAQ. Ethylene glycol compounds are usually used in an amount of 0.1 to 100 mole % based on the starting 1-AAQ. If the amount of phase-transfer catalyst used is extremely small, its catalytic effect tends to be insufficient, while if it is too large, an economic disadvantage tends to result. Although the phase-transfer catalyst is generally added at the commencement of the condensation reaction, no particular limitation is placed on the method of addition, so long as the phase-transfer catalyst is present in the reaction system during the course of the reaction.

Examples of the alkaline condensing agent used in the process of the present invention include alkali metal hydroxides such as potassium hydroxide and sodium hydroxide, and alkali metal salts such as potassium carbonate and sodium carbonate. Among others, potassium hydroxide is preferred. They may be used in the form of a solid or an aqueous solution.

The alkaline condensing agent is used in an amount of 0.1 to 40.0 moles, preferably 0.5 to 10.0 moles, and more preferably 0.8 to 8.0 moles, per mole of the starting 1-AAQ.

The reaction temperature is usually in the range of 80 to 150°C, preferably 120 to 140°C, and more preferably 130 to 135°C. Lower reaction temperatures cause a reduction in the reaction rate. Although higher reaction temperatures accelerate the reaction rate, they are undesirable because higher reaction temperature may cause a reduction in the quality of dianthraquinone-N,N'-dihydroazine.

The present invention is further illustrated by the following examples. However, it is to be understood that the present invention is not limited to these examples but may be otherwise embodied within the true spirit and scope thereof. As used in these examples, the term "yield" means yield based on the starting 1-AAQ. Moreover, the dyeing and evaluation in these examples were carried out according to the following procedures.
1. Each of the resulting dye products was dissolved in water. After the addition of sodium hydroxide and sodium hydrosulfite, it was reduced by allowing the solution to stand at 65°C for 15 minutes. Thereafter, water was added into the solution to cool the resulting solution to room temperature. A dye concentration of the resulting solution was about 2% by weight.
2. Cotton yarns were dyed by soaking them in the above aqueous dye solution (used in an amount of 100 g per gram of yarn), heating the solution to 60°C and holding it at that temperature.
3. The cotton yarn was removed from the solution, squeezed, oxidized, washed with water, soaped and dried.
4. Using dianthraquinone-N,N'-dihydroazine synthesized according to the process described in the Comparative Example which will be given later, cotton yarns were dyed in the same manner as above and used as a standard. The dyeing properties of each product were evaluated by comparison with this standard. In the case of dianthraquinone-N,N'-dihydroazine, a highly pure product causes cotton yarn to be dyed in a reddish bright blue color and a product having a high impurity content causes cotton yarn to be dyed in a greenish dark blue color.

### Example 1

90 g (0.404 mole) of 1-AAQ was suspended in a mixture of 242.1 g (equal to 2.69 times the weight of 1-AAQ) of DMI and 9.9 g of water. Then, 2.0 g (0.018 mole) of a 50% aqueous solution of potassium hydroxide was added thereto. The resulting mixture was heated to 100°C and held at that temperature for an hour. While air (400 ml/min) was passed through the mixture, 85.2 g (0.759 mole) of a 50% aqueous solution of potassium hydroxide was added dropwise thereto over a period of 3 hours. After completion of the addition, the mixture was heated to 130°C and reacted at that temperature for 12 hours with water being distilled off from the system. After the reaction mixture was cooled to 70°C, 63 g of water was poured thereinto and stirred for an hour. The crystals so formed were separated by filtration, washed with water and then dried to obtain 86.4 g of the desired product, dianthraquinone-N,N'-dihydroazine. Its yield was 96.0%. As a result of a dyeing test, cotton yarn was dyed in a reddish bright blue color as compared with the standard.

### Example 2

The procedure of Example 1 was repeated except that 236.7 g (equal- to 2.63 times the weight of 1-AAQ) of DMI and 15.3 g of water were used as solvents and the reaction time was changed to 10 hours. Thus, 86.0 g of the desired product, dianthraquinone-N,N'-dihydroazine, was obtained. Its yield was 95.6% based on 1-AAQ. As a result of a dyeing test, cotton yarn was dyed in a reddish bright blue color as compared with the standard.

### Example 3

The procedure of Example 1 was repeated except that 232.2 g (equal to 2.58 times the weight of 1-AAQ) of DMI and 19.8 g of water were used as solvents and the reaction time was changed to 11 hours. Thus, 86.4 g of the desired product, dianthraquinone-N,N'-dihydroazine, was obtained. Its yield was 96.0% based on 1-AAQ. As a result of a dyeing test, cotton yarn was dyed in a reddish bright blue color as compared with the standard.

### Example 4

The procedure of Example 1 was repeated except that 214.2 g (equal to 2.38 times the weight of 1-AAQ) of DMI and 37.8 g of water were used as solvents and the reaction time was changed to 13.5 hours. Thus, 84.8 g of the desired product, dianthraquinone-N,N'-dihydroazine, was obtained. Its yield was 94.2% based on 1-AAQ. As a result of a dyeing test, cotton yarn was dyed in a reddish bright blue color as compared with the standard.

### Example 5

The procedure of Example 1 was repeated except that 248.2 g (equal to 2.76 times the weight of 1-AAQ) of DMI and 3.8 g of water were used as solvents and the reaction time was changed to 7.5 hours. Thus, 85.5 g of the desired product, dianthraquinone-N,N'-dihydroazine, was obtained. Its yield was 95.0% based on 1-AAQ. As a result of a dyeing test, cotton yarn was dyed in a reddish bright blue color as compared with the standard.

### Example 6

The procedure of Example 1 was repeated except that 246.6 g (equal to 2.74 times the weight of 1-AAQ) of DMI and 5.4 g of water were used as solvents. Thus, 86.1 g of the desired product, dianthraquinone-N,N'-dihydroazine, was obtained. Its yield was 95.6% based on 1-AAQ. As a result of a dyeing test, cotton yarn was dyed in a reddish bright blue color as compared with the standard.

### Example 7

40.0 g (0.179 mole) of 1-AAQ was suspended in a mixture of 113 g of TMA and 5.9 g of water, and 1.3 g (0.012 mole) of a 50% aqueous solution of potassium hydroxide was added thereto. The resulting mixture was heated to 98-100°C, and 38.0 g (0.339 mole) of a 50% aqueous solution of potassium hydroxide was added dropwise thereto at that temperature over a period of 2 hours with air being passed through the mixture. After completion of the addition, the mixture was heated to 129-130°C and reacted at that temperature for 14 hours with water being partially distilled off from the system. After the reaction mixture was cooled to 68-70°C, 150 g of warm water was poured thereinto and the crystals so formed were separated by filtration and washed with water. The resulting filter cake was dried to obtain 38.3 g of the desired product, dianthraquinone-N,N'-dihydroazine. Its yield was 96.0%. As a result of a dyeing test, cotton yarn was dyed in a reddish bright blue color as compared with the standard.

### Example 8

40.0 g (0.179 mole) of 1-AAQ was suspended in a mixture of 113 g of TMA and 5.9 g of water, and 20.0 g (0.350 mole) of 98% potassium hydroxide was added thereto. The resulting mixture was heated to 98-100°C and reacted for 4 hours with air being passed therethrough. After the reaction mixture was cooled to 68-70°C, 150 g of warm water was poured thereinto and the crystals so formed were separated by filtration and washed with water. The resulting filter cake was dried to obtain 36.8 g of the desired product, dianthraquinone-N,N'-dihydroazine. Its yield was 93%. As a result of a dyeing test, cotton yarn was dyed in a reddish bright blue color as compared with the standard.

### Example 9

The procedure of Example 8 was repeated except that 222 g of TMA and 11.7 g of water were used, the potassium hydroxide was replaced by 20.0 g (0.179 mole) of potassium tert-butoxide, and the mixture was heated to 80-82°C and reacted for 6 hours. Thus, 36.6 g of the desired product, dianthraquinone-N,N'-dihydroazine, was obtained. Its yield was 92%. As a result of a dyeing test, cotton yarn was dyed in a reddish bright blue color as compared with the standard.

### Example 10

40.0 g (0.179 mole) of 1-AAQ was suspended in a mixture of 113 g of TMA and 5.9 g of water, and 0.14 ml (0.00036 mole) of a 40% methanolic solution of benzyltrimethylammonium hydroxide and 2.5 g (0.022 mole) of a 50% aqueous solution of potassium hydroxide was added thereto. The resulting mixture was heated to 98-100°C, and 38.0 g (0.339 mole) of a 50% aqueous solution of potassium hydroxide was added dropwise thereto over a period of 2 hours with air being passed through the mixture. After completion of the addition, the mixture was heated to 129-130°C and reacted at that temperature for 4 hours with water being partially distilled off from the system. After the reaction mixture was cooled to 68-70°C, 150 g of warm water was poured thereinto and the crystals so formed were separated by filtration and washed with water. The resulting filter cake was dried to obtain 37.6 g of the desired product, dianthraquinone-N,N'-dihydroazine. Its yield was 95%. As a result of a dyeing test, cotton yarn was dyed in a reddish bright blue color as compared with the standard.

### Examples 11-56

In substantially the same manner as in Example 10, dianthraquinone-N,N'-dihydroazine was synthesized in the presence of various phase-transfer catalysts and the resulting products were subjected to dyeing tests. The reaction conditions employed and the results thus obtained are shown in Table 1. Reaction conditions other than those shown in Table 1 were all the same as those employed in Example 10.

### Comparative Example

The procedure of Example 1 was repeated except that 252.0 g (equal to 2.8 times the weight of 1-aminoanthraquinone) of DMI was used alone as solvent. Thus, 81.0 g of the desired product, dianthraquinone-N,N'-dihydroazine, was obtained. Its yield was 90.0%.

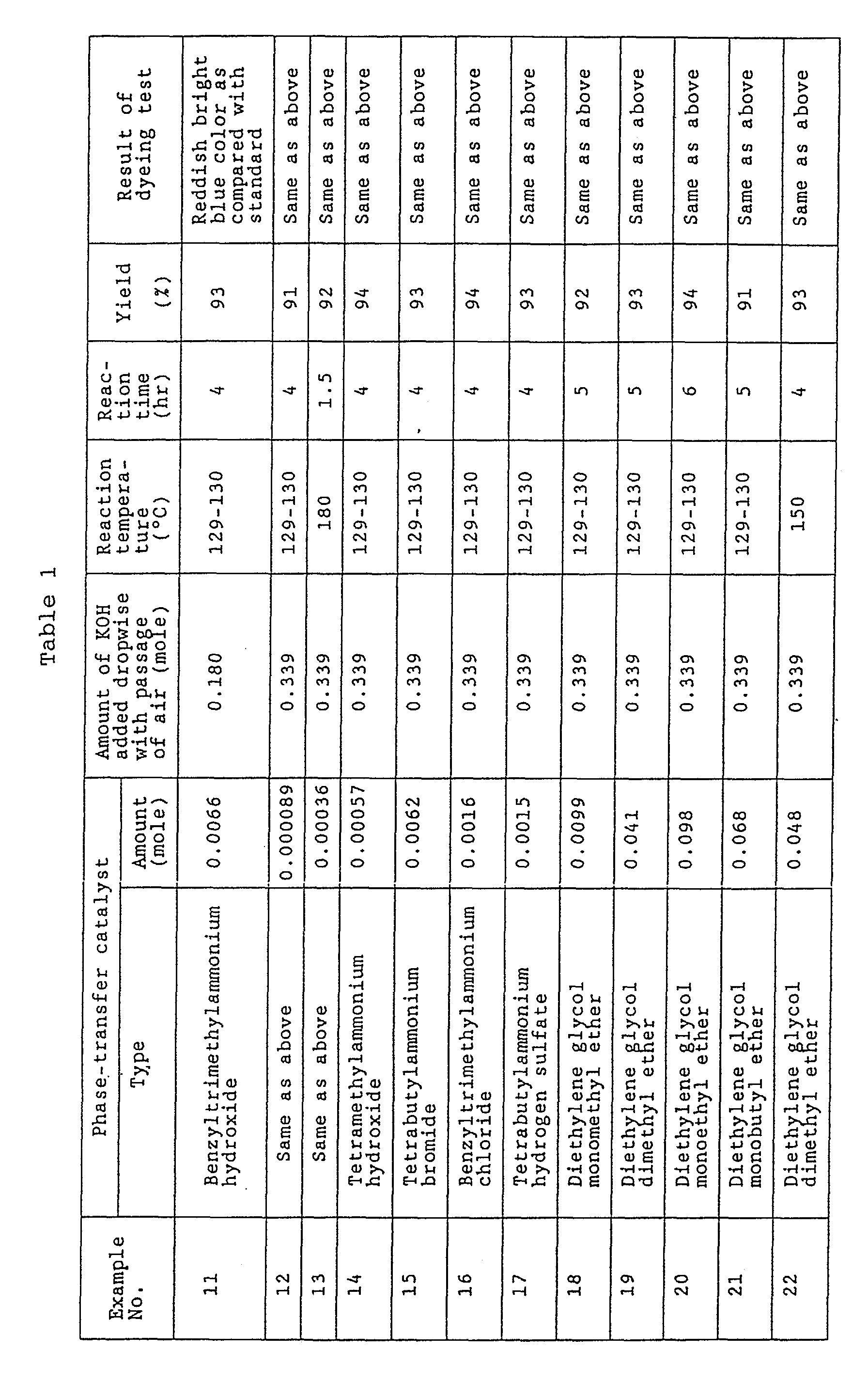

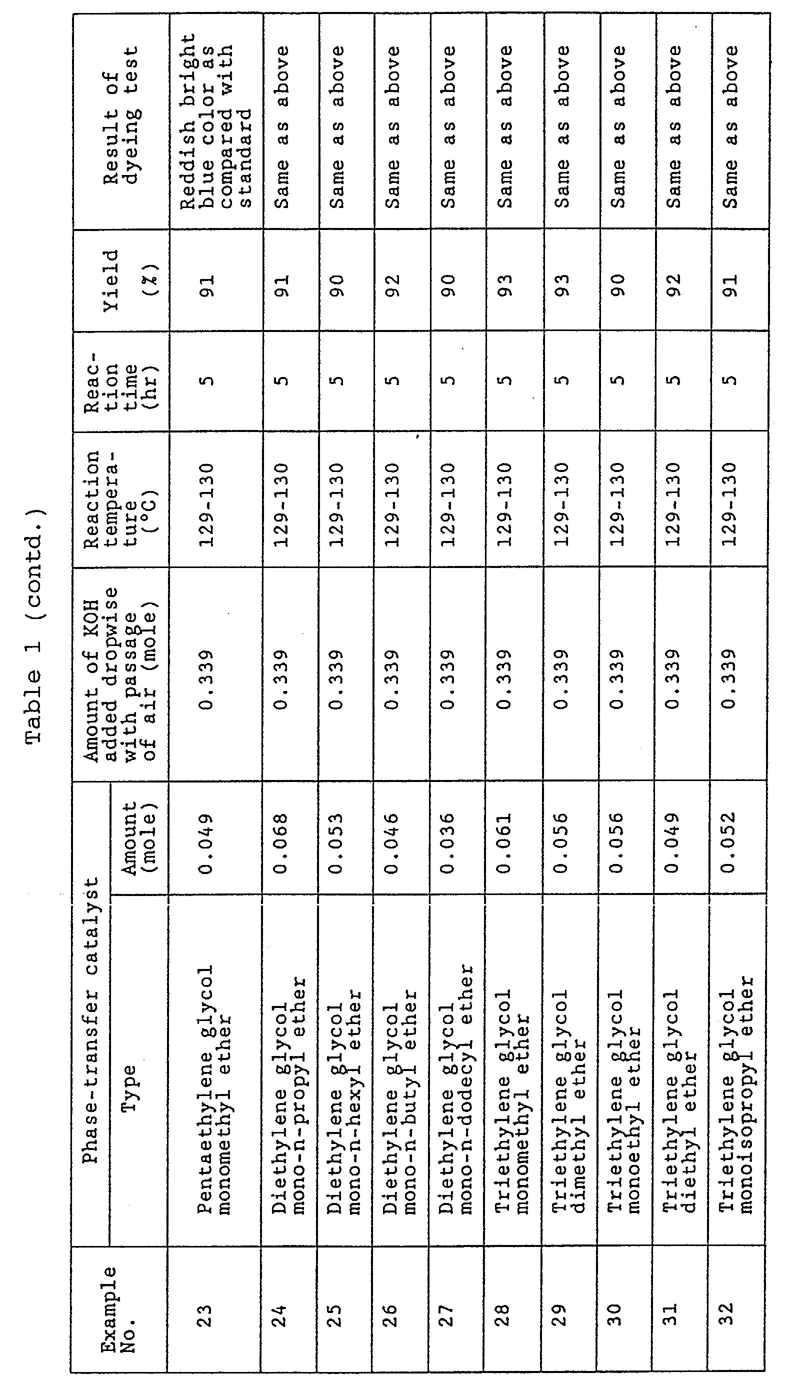

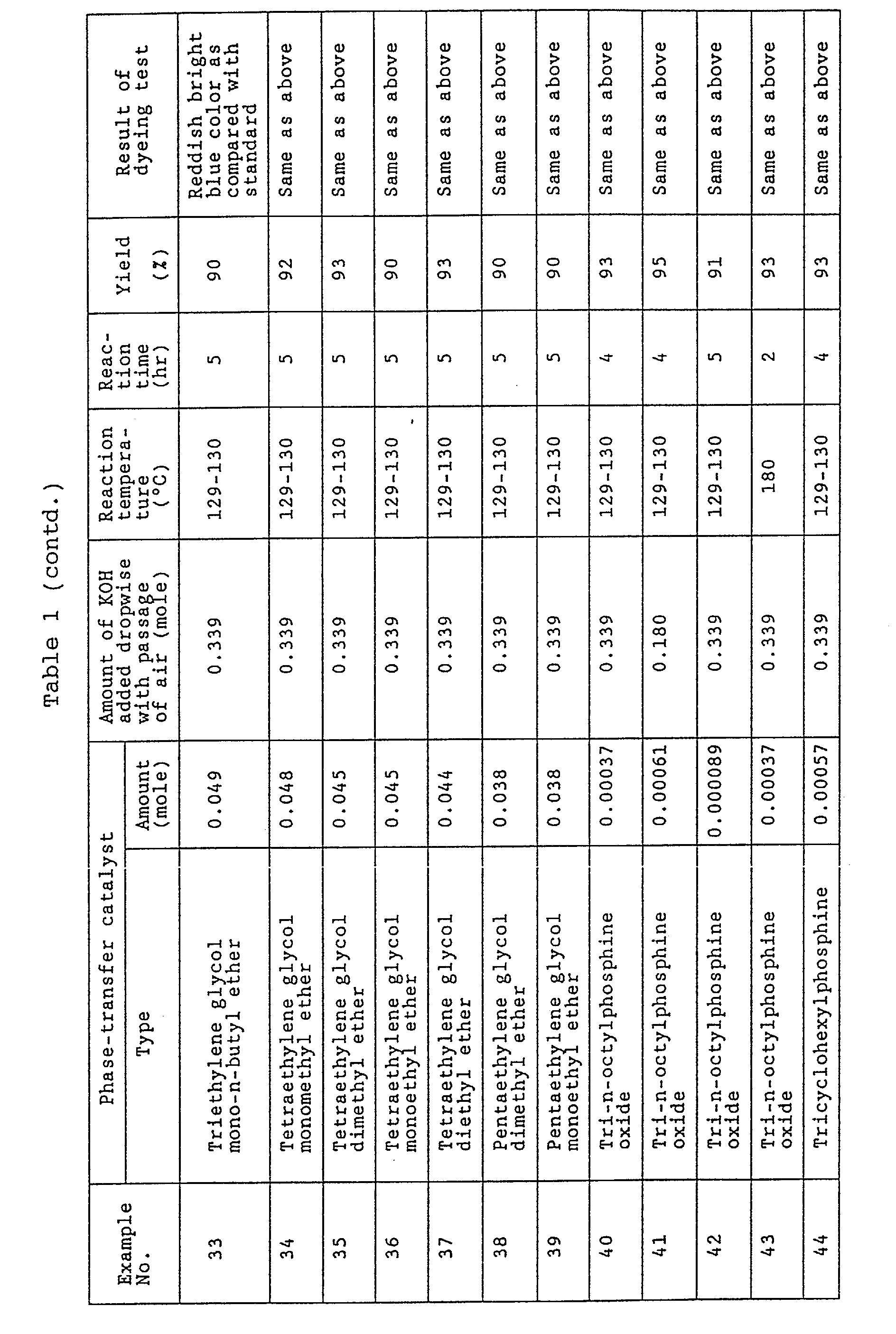

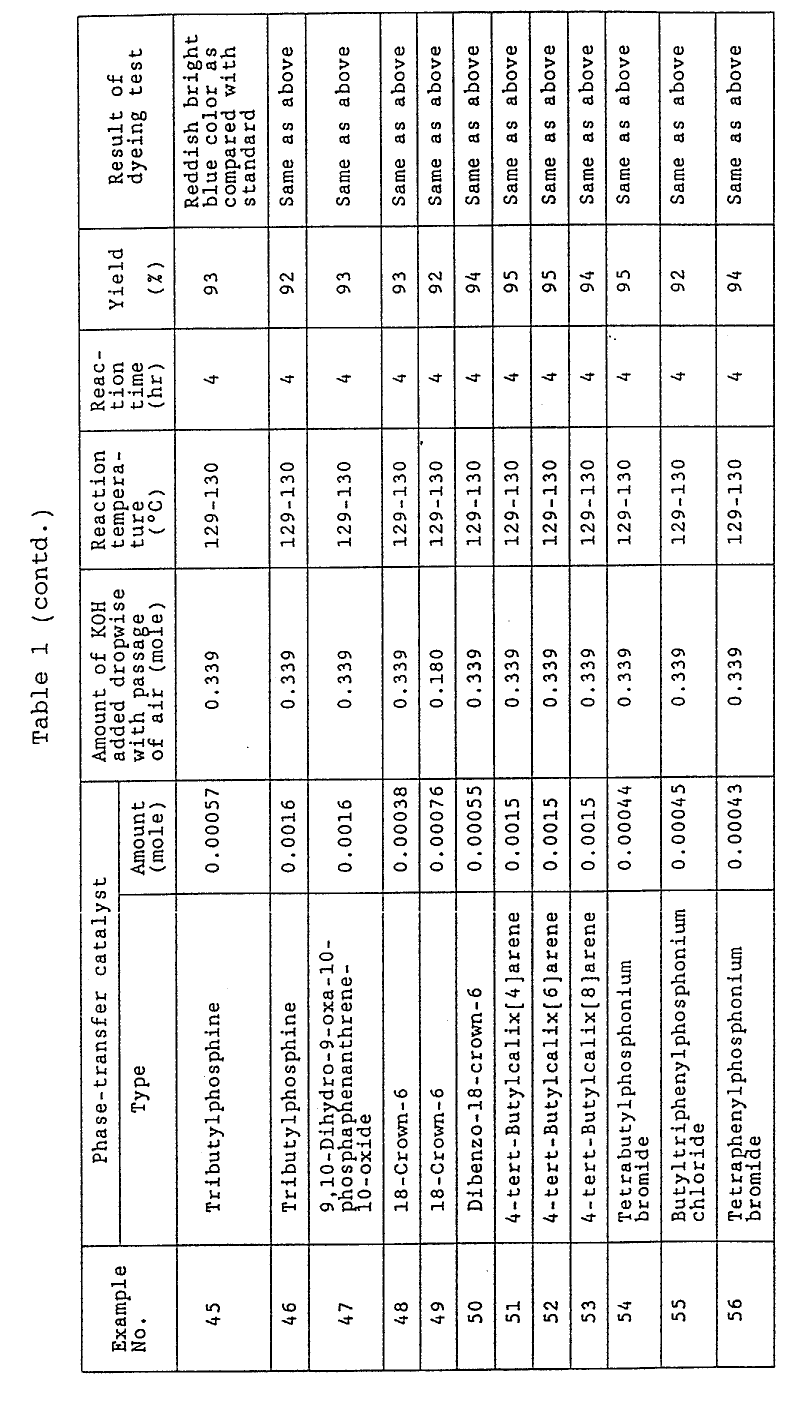

## Claims

1. A process for the production of dianthraquinone-N,N'-dihydroazine which comprises the steps of suspending 1-aminoanthraquinone in a solvent mixture composed of an aprotic polar solvent and water in a weight ratio ranging from 80:20 to 99:1, and reacting the 1-aminoanthraquinone by adding an alkaline condensing agent to the suspension.

2. A process as claimed in claim 1 wherein the weight ratio of the aprotic polar solvent and water ranges from 85:15 to 98.5:1.5.

3. A process as claimed in claim 2 wherein the weight ratio of the aprotic polar solvent and water ranges from 92:8 to 98:2.

4. A process as claimed in claim 3 wherein the weight ratio of the aprotic polar solvent and water ranges from 94:6 to 96:4.

5. A process as claimed in any preceding claim wherein the aprotic polar solvent is 1,3-dimethyl-2-imidazolidinone or 1,3,6-trimethylhexahydro-1,3,6-triazin-2-one.

6. A process as claimed in any preceding claim wherein the suspension of 1-aminoanthraquinone further contains a phase-transfer catalyst.

7. A process as claimed in claim 6 wherein the phase-transfer catalyst comprises one or more compounds selected from the group consisting of quaternary ammonium compounds, ethylene glycol compounds, organic phosphorus compounds, crown ether compounds, calixarene compounds and phosphonium salt compounds.

8. A process as claimed in claim 7 wherein the phase-transfer catalyst is selected from the group consisting of quaternary ammonium compounds, ethylene glycol compounds, organic phosphorus compounds, crown ether compounds, calix-arene compounds and phosphonium salt compounds, and used in an amount of 0.001 to 20.0 mole percent based on the starting 1-aminoanthraquinone.

9. A process as claimed in claim 7 wherein the phase-transfer catalyst is an ethylene glycol compound and is used in an amount of 0.1 to 100 mole percent based on the starting 1-aminoanthraquinone.

## Patentansprüche

1. Verfahren zur Herstellung von Dianthrachinon-N,N(-dihydroazin, das die Schritte des Suspendierens von 1-Aminoanthrachinon in einem Lösungsmittelgemisch aus einem aprotischen polaren Lösungsmittel und Wasser im Gewichtsverhältnis von 80:20 bis 99:1 und die Umsetzung des 1-Aminoanthrachinons durch Zugabe eines alkalischen Kondensationsmittels zu der Suspension umfaßt.

2. Verfahren nach Anspruch 1, worin das Gewichtsverhältnis von aprotischem polarem Lösungsmittel und Wasser im Bereich von 85:15 bis 98,5:1,5 liegt.

3. Verfahren nach Anspruch 2, worin das Gewichtsverhältnis von aprotischem polarem Lösungsmittel und Wasser im Bereich von 92:8 bis 98:2 liegt.

4. Verfahren nach Anspruch 3, worin das Gewichtsverhältnis von aprotischem polarem Lösungsmittel und Wasser im Bereich von 94:6 bis 96:4 liegt.

5. Verfahren nach einem der vorhergehenden Ansprüche, worin das aprotische polare Lösungsmittel 1,3-Dimethyl-2-imidazolidinon oder 1,3,6-Trimethylhexahydro-1,3,6-triazin-2-on ist.

6. Verfahren nach einem der vorhergehenden Ansprüche, worin die Suspension aus 1-Aminoanthrachinon zusätzlich einen Phasentransferkatalysator enthält.

7. Verfahren nach Anspruch 6, worin der Phasentransferkatalysator eine oder mehrere Verbindungen umfaßt, die aus der Gruppe ausgewählt sind, die aus quaterären Ammoniumverbindungen, Ethylenglycolverbindungen, organischen Phosphorverbindungen, Kronenetherverbindungen, Calixarenverbindungen und Phosphoniumsalzverbindungen besteht.

8. Verfahren nach Anspruch 7, worin der Phasentransferkatalysator aus der Gruppe ausgewählt ist, die aus quaternären Ammoniumverbindungen, Ethylenglycolverbindungen, organischen Phosphorverbindungen, Kronenetherverbindungen, Calixarenverbindungen und Phosphoniumsalzverbindungen besteht, und in einer Menge von 0,001 bis 20,0 Mol-%, bezogen auf die Ausgangsverbindung 1-Aminoanthrachinon, verwendet wird.

9. Verfahren nach Anspruch 7, worin der Phasentransferkatalysator eine Ethylenglycolverbindung ist und in einer Menge von 0,1 bis 100 Mol-%, bezogen auf die Ausgangsverbindung 1-Aminoanthrachinon verwendet wird.

## Revendications

1. Procédé pour la production de la dianthraquinone-N,N'-dihydroazine qui comprend les étapes. consistant à mettre en suspension la 1-aminoanthraquinone dans un mélange de solvant composé d'un solvant polaire aprotique et d'eau dans un rapport pondéral allant de 80:20 à 99:1, et à mettre en réaction la 1-aminoanthraquinone en ajoutant à la suspension un agent de condensation alcalin.

2. Procédé selon la revendication 1, dans lequel le rapport pondéral entre le solvant polaire aprotique et l'eau varie de 85:15 à 98,5:1,5.

3. Procédé selon la revendication 2, dans lequel le rapport pondéral entre le solvant polaire aprotique et l'eau varie de 92:8 à 98:2.

4. Procédé selon la revendication 3, dans lequel le rapport pondéral entre le solvant polaire aprotique et l'eau varie de 94:6 à 96:4.

5. Procédé selon l'une quelconque des revendications précédentes, dans lequel le solvant polaire aprotique est la 1, 3-diméthyl-2-imidazolidinone ou la 1,3,6-triméthylhexahydro-1,3,6-triazin-2-one.

6. Procédé selon l'une quelconque des revendications précédentes, dans lequel la suspension de 1-aminoanthraquinone contient de plus un catalyseur de transfert de phase.

7. Procédé selon la revendication 6, dans lequel le catalyseur de transfert de phase comprend un ou plusieurs composés choisis dans le groupe constitué par des composés d'ammonium quaternaire, des composés d'éthylène-glycol, des composés de phosphore organique, des composés cycliques d'éther, des composés de calixarène et des composés de sel de phosphonium.

8. Procédé selon la revendication 7, dans lequel le catalyseur de transfert de phase est choisi dans le groupe constitué par des composés d'ammonium quaternaire, des composés d'éthylène-glycol, des composés de phosphore organique, des composés cycliques d'éther, des composés de calixarène et des composés de sel de phosphonium, et utilisé dans une quantité de 0,001 à 20,0 % en moles rapportés à la 1-aminoanthraquinone de départ.

9. Procédé selon la revendication 7, dans lequel le catalyseur de transfert de phase est un composé d'éthylèneglycol et il est utilisé dans une quantité de 0,1 à 100 % en moles rapportés à la 1-aminoanthraquinone de départ.
